# EUROPÄISCHE PATENTSCHRIFT

(11) **EP 1 532 306 B1**
(45) Veröffentlichungstag und Bekanntmachung des Hinweises auf die Patenterteilung: **21.05.2008**
(21) Anmeldenummer: 03790747.4
(22) Anmeldetag: 22.08.2003
(51) Int. Cl.: D06F 39/08, A47L 15/42

(54) **HAUSHALTSMASCHINE**
HOUSEHOLD MACHINE
APPAREIL ELECTROMENAGER

(30) Priorität: 23.08.2002 DE 10238801; 10.07.2003 DE 10331404
(43) Veröffentlichungstag der Anmeldung: 25.05.2005
(73) Patentinhaber: AWECO APPLIANCE SYSTEMS GmbH & Co. KG, 88099 Neukirch (DE)
(72) Erfinder: SCHROTT, Harald, 88131 Lindau (DE)
(74) Vertreter: Roth, Klaus
(86) Internationale Anmeldenummer: PCT/DE2003/002839
(87) Internationale Veröffentlichungsnummer: WO 2004/020727

(56) Entgegenhaltungen:
- EP-A- 0 518 147
- EP-A- 0 715 235
- EP-A- 1 354 998
- DE-A- 2 649 302
- DE-A- 3 744 558
- DE-A- 4 240 513
- FR-A- 1 287 850

## Beschreibung

Die Erfindung betrifft eine Haushaltsmaschine, wie eine Geschirrspülmaschine oder eine Waschmaschine nach dem Oberbegriff des Anspruchs 1.

Bislang werden beispielsweise bei Geschirrspülmaschinen in der Regel zwei Pumpen eingesetzt, wobei eine der Pumpen als Umwälzpumpe während des Spülbetriebs und die andere Pumpe zum Abpumpen der Lauge nach Beendigung eines Spülprogramms bzw. eines Programmschritts vorgesehen ist. Beide Pumpen stehen hierbei an der Saugseite in Verbindung mit dem Sumpf der Spülmaschine.

Während die Laugenpumpe druckseitig mit dem Abfluss der Geschirrspülmaschine in Verbindung steht, versorgt die Umwälzpumpe über entsprechende Anschlussleitungen druckseitig die Sprüharme der Spülmaschine.

Auch bei Waschmaschinen ist die Verwendung solcher Umwälzpumpen bekannt (siehe z.B. EP 0 518 147 A), um die Wäsche nicht nur über die Trommelbewegung mit Waschlauge zu benetzen, sondern auch zu besprühen, um den Wasserverbrauch zu reduzieren.

Aus Kostengründen werden hierbei in der Regel Asynchronmotoren für die Flüssigkeitspumpen verwendet, die im Aufbau sowie in der Ansteuerung einfach zu realisieren sind. Nachteilig hierbei sind die schlechteren Möglichkeiten zur Drehzahlregelung, woraus sich häufig eine Vibration und ein damit verbundenes Brummgeräusch ergibt, das sich letzten Endes auf die Welligkeit der Versorgungsspannung zurückführen lässt.

Aufgabe der Erfindung ist es demgegenüber, eine Haushaltsmaschine mit Flüssigkeitskreislauf der einleitend genannten Art vorzuschlagen, bei der die oben angeführten Nachteile reduziert werden und die zugleich kostengünstig herstellbar ist.

Diese Aufgabe wird, ausgehend von einer Haushaltsmaschine der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Haushaltsmaschine dadurch aus, dass wenigstens eine der beiden Pumpen an eine Kontrolleinheit für die Motorsteuerung und/oder Regelung zuschaltbar ist.

Auf diese Weise wird der Aufwand für die Bereitstellung der Motorsteuerung der Pumpen deutlich reduziert, nämlich nahezu halbiert. Die Erfindung macht sich hierbei den Umstand zunutze, dass die Umwälzpumpe und die Laugenpumpe bzw. Abflusspumpe im Betrieb solcher Haushaltsmaschinen im Allgemeinen nicht gleichzeitig eingeschaltet werden. Hierdurch ist es durch die zeitliche Abfolge im Betrieb der beiden Pumpen möglich, diese mit einer gemeinsamen Kontrolleinheit für die Motorsteuerung zu betreiben, die über ein entsprechendes Umschaltelement zwischen den Pumpen umschaltbar ist. Mit Hilfe der Kontrolleinheit können die einzelnen Pumpen zudem deutlich flexibler angesteuert werden.

Durch die erfindungsgemäße Kostenminderung beim Aufwand für die Motorsteuerung ist es möglich, ohne wirtschaftliche Einbußen auch aufwendigere Motorsteuerungen für entsprechend ausgebildete Elektromotoren zu verwenden.

In einer bestimmten Ausführungsform ist eine Parallelschaltung der Pumpen verwirklicht, wobei eine Umschaltung der Kontrolleinheit zwischen den Pumpen vorhanden ist, um den separaten Antrieb jeder Pumpe wahlweise zu ermöglichen.

Gemäß der Erfindung ist eine Serienschaltung der beiden Pumpen vorgesehen, wodurch die gewünschte Ansteuerung der Pumpen mit besonders geringem Aufwand realisierbar ist.

In vorteilhafter Weise ist wenigstens ein zwischen den Pumpen angeordnetes Schaltelement, insbesondere ein Relais oder dergleichen, für die Motorsteuerung und/oder Regelung vorgesehen ist. Hiermit kann wenigstens eine der Pumpen mittels der Kontrolleinheit ab- bzw. zugeschaltet werden.

Vorteilhafterweise ist die Kontrolleinheit zur Anpassung der Frequenzzunahme pro Zeiteinheit ausgebildet. Mit dieser Maßnahme wird ermöglicht, dass vor allem bei der Verwendung von Synchronmotoren als Pumpmotoren beispielsweise der etwas größer dimensionierte Pumpmotor bei einer vergleichsweise starken Frequenzzunahme pro Zeiteinheit, d.h. bei einer sog. steilen Rampe, nicht beschleunigt wird und somit keine Pumpfunktion erfüllt. Dagegen kann in diesem Fall der kleiner dimensionierte Pumpmotor der starken Frequenzzunahme pro Zeiteinheit folgen, so dass dieser beschleunigt wird und seine Pumpfunktion erfüllt. Das bedeutet, dass bei einer von der Kontrolleinheit erzeugten, relativ steilen Rampe sich lediglich der im Vergleich kleinere Pumpmotor dreht.

In dem Fall, dass die Kontrolleinheit eine vergleichsweise geringe Frequenzzunahme pro Zeiteinheit, d.h. eine sog. flachen Rampe, generiert, können in vorteilhafter Weise beide, seriell oder parallel verschaltete Pumpmotoren beschleunigt werden und ihre Pumpfunktion erfüllen. Hierbei kann mittels dem vorteilhaften Schaltelement bzw. Relais vorzugsweise der im Vergleich kleinere Pumpmotor abgeschaltet werden, so dass ausschließlich der im Vergleich größere Pumpmotor arbeitet und seine Pumpfunktion erfüllt. Das bedeutet, dass bei einer von der Kontrolleinheit erzeugten, relativ flachen Rampe einerseits beide Pumpmotoren oder andererseits sich lediglich der nicht abgeschaltete, z.B. der im Vergleich größere Pumpmotor dreht.

Grundsätzlich wird bei den zuvor beschriebenen Fällen die unterschiedlichen Beschleunigungseigenschaften von unterschiedlich groß dimensionierten Pumpmotoren in vorteilhafter Weise zum Betreiben bzw. Ansteuern dieser verwendet. Hierdurch kann die gewünschte Ansteuerung der einzelnen Pumpen gemäß der Erfindung mit besonders wenig Aufwand realisiert werden

In einer vorteilhaften Ausführungsform werden die beiden Pumpen durch elektronisch kommutierte Synchronmotoren angetrieben, wobei nur eine darauf abgestimmte Motorsteuerung vorzusehen ist. Vor allem ist als Vorteil hierbei die bessere Drehzahlregelung zu nennen, durch die einerseits die Geräuschentwicklung der Maschine und andererseits der Energieverbrauch durch genauere Anpassung an die erforderliche Leistung zu vermindern ist.

Eine umschaltbare Motorsteuereinheit wird vorzugsweise mit Hilfe einer prozessorgesteuerten Kontrolleinheit realisiert. Hierbei wird nur ein Prozessor und eine Treiberstufe benötigt, die ein- oder mehrphasig sein kann. Die Umschaltung von einer Pumpe zur anderen kann hierbei softwaregesteuert mit Hilfe eines einfachen Umschaltelementes, wie einem Relais oder Halbleiterschaltelementen vorgenommen werden.

In einer vorteilhaften Weiterbildung wird darüber hinaus der Umstand ausgenutzt, dass mit einer Motorsteuereinheit auch ohne größeren Aufwand Motoren verwendbar sind, die im Niedervoltbereich zu betreiben sind. Zum einen bietet dies den Vorteil, dass auch die Steuerelektronik im Niedervoltbereich arbeiten kann, wodurch sich deren Aufbau erleichtert. Darüber hinaus ergibt sich sowohl auf Seiten der Motorsteuerung als auch auf Seiten der Pumpen ein Sicherheitsvorteil durch Verwendung von Niedervoltspannung. Der Aufwand bei der Isolation wird verringert und es lässt sich durch eine entsprechende

Ansteuerung eine erhebliche Energieeinsparung erzielen.

Sofern zudem Gleichspannungsmotoren für den Pumpenantrieb verwendet werden, so entfällt der durch die Welligkeit der Betriebsspannung bislang gelegentlich erzeugte Brummton vollständig.

Im Niedervoltbereich kann beispielsweise eine Gleichspannung in Höhe von 42 Volt oder kleiner verwendet werden, um die oben angeführten Vorteile zu erzielen.

In die Kontrolleinheit für die Motorsteuerung können noch weitere elektrische oder elektronische Bauelemente für zusätzliche Funktionen integriert werden. So ist es beispielsweise möglich, ein Schaltelement zur Ansteuerung und/oder Regelung einer Heizung der Haushaltsmaschine über die Steuereinheit für die Motorsteuerung zu schalten. In Frage kommt hierbei beispielsweise je nach Schaltelement eine Regelung des Heizungsstroms und/oder der Zeitintervalle der Einschaltung.

In einer bevorzugten Weiterbildung dieser Ausführungsform wird das Schaltelement selbst in die Kontrolleinheit integriert. Dies ist vor allem dann von Vorteil, wenn die Heizung für den Flüssigkeitskreislauf in eine Flüssigkeitspumpe integriert ist, da in diesem Fall die Leitungsführung für die Heizung parallel zur Leitungsführung für den Pumpenantrieb verläuft.

In einer weiteren vorteilhaften Ausführungsform der Erfindung wird zudem ein Schaltelement zur Strombegrenzung vorgesehen. Dieses Schaltelement kann wiederum über die Kontrolleinheit für die Pumpenmotoren betätigt werden. Die Strombegrenzung kann hierbei eine Überlastung der entsprechenden Baukomponenten, beispielsweise der Pumpenmotoren oder der Flüssigkeitsheizung bewirken.

Weiterhin kann in einer erfindungsgemäßen Haushaltsmaschine in die Steuereinheit für die Pumpenmotoren zusätzlich eine Umschaltung eines oder mehrerer Flüssigkeitskreisläufe über die Steuereinheit vorgenommen werden. In Frage kommt beispielsweise eine Umschaltung zwischen den verschiednen Spritzarmen, indem eine entsprechende Flüssigkeitsweiche, Schaltventile oder allgemein ausgedrückt ein entsprechender Aktuator über die Steuereinheit betätigt wird.

In einer Weiterbildung werden weiterhin ein oder mehrere Sensoren zur Kontrolle der Betriebszustände der Haushaltsmaschine und/oder als Schutz vor Schäden aus Überlastung oder Defekten vorgesehen.

Ein solcher Sensor kann beispielsweise als Drucksensor ausgebildet werden, der den Flüssigkeitsdruck in einer Flüssigkeitsleitung misst. Auch ein Lastsensor, der die Stromaufnahme der Pumpenmotoren erfasst, ist als Sensor in einer solchen Anwendung denkbar. Andere Sensoren, beispielsweise zur Erfassung der Temperatur oder des Flüssigkeitszustands, z.B. einer Schaumbildung oder Verschmutzung bzw. Eintrübung der Flüssigkeit können ebenfalls vorgesehen werden.

Alle genannten und sonstige Sensoren können über die ohnehin vorgesehene Kontrolleinheit für die Pumpenmotoren betrieben und ausgelesen werden.

Grundsätzlich ist hierbei auch die Ausbildung verschiedener Sensoreinheiten über die Programmierung der Kontrolleinheit möglich. So können zeitliche Veränderungen in der Lastaufnahme eines Elektromotors gegebenenfalls in Verbindung mit anderen Messdaten durchaus aus Aussagen über den Zustand der Flüssigkeit, beispielsweise den Verschmutzungsgrad oder deren Schaumbildung ermöglichen. Auch eine Überwachung des Wasserstandes ist über eine solche Kontrolleinheit in Verbindung mit einem oder mehreren entsprechenden Sensoren möglich. Gegebenfalls kann bei zu wenig Flüssigkeit oder entsprechendem Zustand der Flüssigkeit ein Stopp der Maschine, eine Aufbereitung der Flüssigkeit oder eine automatische Flüssigkeitsnachführung ausgelöst werden.

Vorteilhafterweise wird die erfindungsgemäße Haushaltsmaschine so weitergebildet, dass in der Steuereinheit die Welligkeit der gleichgerichteten Netzspannung unterdrückt oder zumindest deutlich reduziert wird. Hierbei können Software-Algorithmen für den Steuerprozessor vorgesehen werden, die die gleichgerichtete Versorgungsspannung derart ausregeln, dass der gewünschte Effekt, z.B. die Unterdrückung von 100 Hz Brummgeräuschen am Rotor der Pumpenmotoren erzielt werden. Ein solcher Brummton ist häufig ein Problem nach der Gleichrichtung einer netzüblichen Wechselspannung.

Vorzugsweise wird weiterhin ein Anfahr-Algorithmus in der Kontrolleinheit für die Pumpenmotoren vorgesehen, welcher den sicheren Anlauf des Rotors gewährleistet. Je nach Winkelposition des Rotors kann das Anlaufen, insbesondere in der gewünschten Drehrichtung ein Problem darstellen. Über einen entsprechenden Anfahr-Algorithmus, beispielsweise durch eine alternierende Vorwärts- und Rückwärtsdrehung kann der Rotor gewissermaßen in Resonanz aufgeschaukelt werden und somit ein zuverlässiges Anlaufen des Motors sichergestellt werden.

Weiterhin wird vorzugsweise in die Kontrolleinheit für die Pumpmotoren eine Schnittstelle für die Datenübertragung zu einer geeigneten Kommunikationseinrichtung ausgebildet. In der Zukunft werden elektronische Anlagen für ein Hausmanagement oder aber auch zur Online-Diagnose und Wartung eine immer größere Rolle spielen. Daher ist es sinnvoll, wenn entsprechende Haushaltsmaschinen mit zugehörigen Schnittstellen versehen sind. In Frage kommt hier beispielsweise ein sogenanntes Bus-Interface für die Verbindung an einen modernen Datenbus.

Als Medium für die Datenübertragung wird in einer bestimmten Ausführungsform das Stromleitungsnetz für die. Energieversorgung der Haushaltsmaschine verwendet. Mit entsprechender Aufbereitung der Daten, beispielsweise über eine Modulation können die gewünschten Informationen über das Leitungsnetz der Netzspannung übertragen werden.

In einer anderen vorteilhaften Ausführungsform wird eine drahtlose Datenübertragung, z.B. mittels Funk- oder Infrarot- oder Ultraschallsende- und empfangseinheiten verwirklicht. Insbesondere eignen sich für eine solche Datenübertragung die sogenannten "Blue Tooth"-Module die vermehrt und immer kostengünstiger in den Handel kommen.

Ein Ausführungsbeispiel der Erfindung ist in der Zeichnung 2 dargestellt und wird anhand der Figuren nachfolgend näher erläutert.

Es zeigt:
- Figur 1:: ein schematisches Blockschaltbild zur Veranschaulichung der elektrischen und elektronischen Komponenten einer Haushaltsmaschine,
- Figur 2:: ein weiteres, schematisches Blockschaltbild zur Veranschaulichung der elektrischen und elektronischen Komponenten einer Haushaltsmaschine gemäß der Erfindung und
- Figur 3:: ein drittes, schematisches Blockschaltbild zur Veranschaulichung der elektrischen und elektronischen Komponenten einer Haushaltsmaschine gemäß der Erfindung.

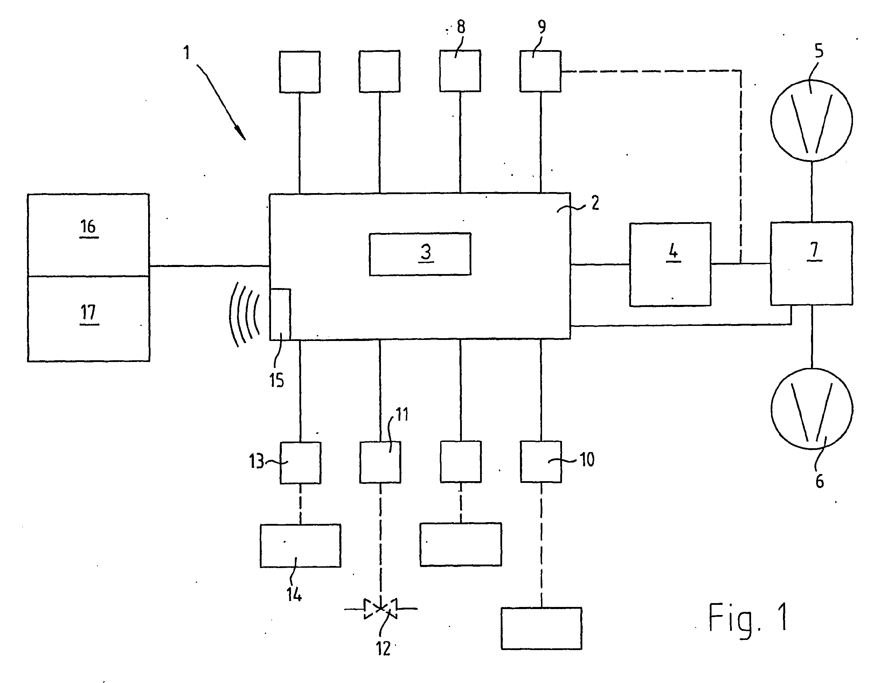

Das Blockdiagramm gemäß der Figur 1 zeigt eine Kontrolleinheit 1 zum Steuern und/oder Regeln einer erfindungsgemäßen Haushaltsmaschine. Zentraler Bestandteil der Kontrolleinheit 1 ist ein Computer 2 mit Prozessor 3. Computer 2 verfügt über alle erforderlichen, nicht näher dargestellten Bauelemente, wie beispielsweise Daten oder Programmspeicher, ein Bussystem, digitale und/oder analoge Ein- und/oder Ausgänge, usw.. Über den Prozessor 3 kann eine Treiberstufe 4, die ein- oder mehrphasig ausgebildet sein kann angesteuert werden, die für den Antrieb zweier Pumpen 5, 6 vorgesehen ist. Eine Pumpe 5 ist als Umwälzpumpe vorgesehen, während die andere Pumpe 6 als Laugenpumpe einer Geschirrspülmaschine dient.

Die Umschaltung der Kontrolleinheit 1 zwischen den beiden Pumpen 5, 6 geschieht mit Hilfe eines Schaltelementes 7, das im einfachsten Fall als Relais ausgebildet ist. Das Schaltelement 7 wird ebenfalls von der Kontrolleinheit 1 bzw. dem Computer 2 betätigt.

Neben der Steuerung bzw. Regelung der beiden Pumpen 5, 6 ist die Kontrolleinheit 1 noch zur Wahrnehmung einer Vielzahl weiterer Funktionen in der Lage. So sind eine Vielzahl von Sensoren 8 an einer Seite des Computers 2 angedeutet, die die Erfassung eines oder mehrerer Maschinenparameter veranschaulichen sollen. Einer dieser Sensoren 9 kann beispielsweise ein Lastsensor zur Erfassung der Pumpenlast bzw. des aufgenommenen Pumpenstroms sein, wie dies über die gestrichelte Linie zur Ausgangsleitung der Treibereinheit 4 angedeutet ist.

Abhängig von den Sensordaten bzw. dem ablaufenden Maschinenprogramm kann darüber hinaus eine Reihe von Aktuatoren 10 von der Kontrolleinheit 1 betätigt werden. Über solche Aktuatoren ist es beispielsweise möglich, Ventile zu betätigen, wie dies anhand des Aktuators 11 und des schematisch dargestellten Ventils 12 dargestellt ist. Über ein solches Ventil kann beispielsweise eine Spritzarmumschaltung einer Geschirrspülmaschine oder aber auch ein Regenerationsvorgang für einen Ionentauscher ausgelöst werden.

Über einen solchen Aktuator kann, wie anhand des Aktuators 13 angedeutet, auch eine Dosiervorrichtung 14, beispielsweise für Reiniger oder Klarspüler betätigt werden. Grundsätzlich können über solche Aktuatoren alle erforderlichen Maschinenfunktionen durch die Kontrolleinheit 1 wahrgenommen werden.

Weiterhin ist ein drahtloses Interface 15 angedeutet, das beispielsweise ein "Blue Tooth"-Modul sein kann. Das Interface 15 dient zur Kommunikation mit einem externen Computer, beispielsweise für ein Haushaltsmanagement oder aber für eine externe Onlineüberwachung und gegebenenfalls - wartung der Haushaltsmaschine.

Weiterhin ist ein Display 16 sowie ein Eingabeelement 17 angedeutet, über das die Kontrolleinheit 1 einer Bedienperson Informationen anzeigen und von dieser empfangen kann.

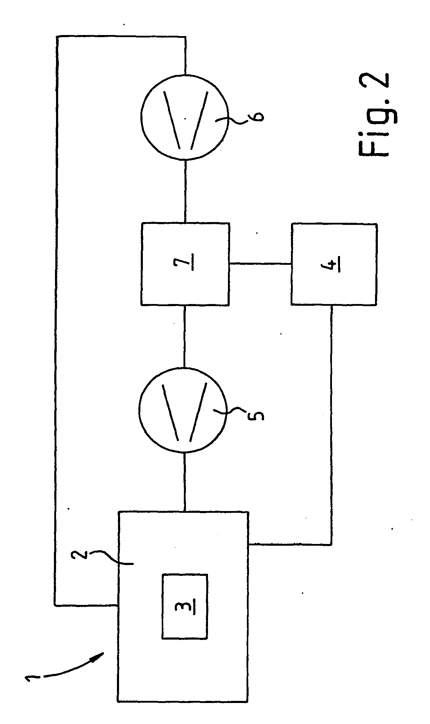

In Figur 2 ist eine Variante gemäß der Erfindung dargestellt, wobei die Kontrolleinheit 1 ohne nähere Darstellung die Peripherie-Komponenten gemäß Figur 1 ebenfalls umfassen kann. Im Unterschied zur Variante gemäß Figur 1 weist die Haushaltmaschine gemäß Figur 2 zwei in Reihe geschaltete Pumpen 5, 6 auf. Zwischen diesen ist das Schaltelement 7 bzw. Relais 7 angeordnet.

Die kleinere Pumpe 6 wird mit dem Relais 7 im Allgemeinen in dem Fall abgeschalten, bei dem lediglich die größere Pumpe 5 betrieben werden soll. Hierbei schaltet die Kontrolleinheit 1 die Pumpe 5 mit einer vergleichsweise flachen Rampe ein, d.h. mit einer relativ kleinen Frequenzzunahme pro Zeiteinheit, so dass die Pumpe 5 beschleunigt wird. Die Steigung der Einschaltrampe hängt hierbei im Wesentlichen von der Dimensionierung bzw. den Beschleunigungseigenschaften der Pumpe 5 ab.

In dem Fall, bei dem lediglich die kleinere Pumpe 6 betrieben werden soll, fährt die Kontrolleinheit beide Pumpen 5, 6 mit einer vergleichsweise steilen Einschaltrampe an, d.h. mit einer relativ großen Frequenzzunahme pro Zeiteinheit bzw. großen Beschleunigung. Die Rampe muss hierbei so steil gewählt werden, dass die größere Pumpe 5 aufgrund ihrer Dimensionierung bzw. Beschleunigungseigenschaften nicht beschleunigt wird bzw. sich nicht zu drehen beginnt.

Dementsprechend können in eleganter Weise mittels einer Kontrolleinheit 1, die die Einschaltrampen verändern bzw. anpassen kann, und einem Schaltelement 7 zumindest vier unterschiedliche Betriebszustände der Pumpen 5, 6 realisiert werden:
1. kleinere Pumpe 6 ein und größere Pumpe 5 aus, 2. größere Pumpe 5 ein und kleinere Pumpe 6 aus sowie 3. beide Pumpen 5, 6 ein bzw. 4. beide Pumpen 5, 6 aus.

Wie anhand der Figuren erkennbar ist, kann die Kontrolleinheit 1 als zentrale Steuer- und Regeleinheit der entsprechenden Haushaltsmaschine Verwendung finden. Wesentlich ist dabei die Funktion als Steuereinheit für zwei Pumpen 5, 6, d.h. im dargestellten Ausführungsbeispiel für die Umwälzpumpe 5 und die Laugenpumpe 6. Hierdurch sind Motoren für die Pumpen 5, 6 verwendbar, die eine gegenüber herkömmlichen Maschinen aufwändigere Steuerung benötigen, wobei die hierdurch entstehenden Kosten dadurch aufgefangen werden, dass nur eine Steuerelektronik bzw. nur ein Steuercomputer 2 und nur eine Treibereinheit 4 für beide Pumpen 5, 6 vorgesehen wird.

Die zusätzlichen Funktionen, die anhand der Sensoren 8, 9 der Aktuatoren 10, 11, 13, usw. dargestellt sind, lassen sich mit vergleichsweise wenig Aufwand in eine solche Kontrolleinheit 1 integrieren, nachdem der entsprechende Computer 2 mit dem Prozessor 3 bereits als elektronische Kontrolleinheit für die Pumpen 5, 6 vorhanden ist.

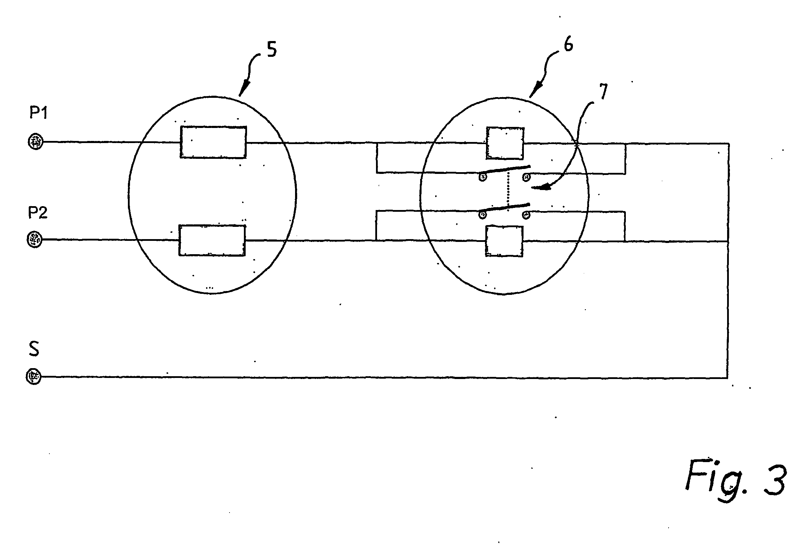

In Figur 3 ist eine weitere Variante der Erfindung dargestellt, wobei die Pumpe 5 und die Pumpe 6 bzw. deren Spulen mittels zweier Phasen P1 und P2 sowie einem Sternpunkt S mit elektrischer Energie versorgt werden. Lediglich aus Gründen der Übersichtlichkeit werden weitere Komponenten bzw. Details (vgl. Figur 1 oder 2) nicht näher dargestellt, diese werden jedoch entsprechend in einer Haushaltsmaschine gemäß der Erfindung vorgesehen.

In der dargestellten Stellung des Schaltelements 7 bzw. Relais 7 der Figur 3 ist eine Serienschaltung der beiden Pumpen 5, 6 verwirklicht. In dieser Stellung werden die einzelnen Pumpen 5, 6 vergleichbar mit dem Ausführungsbeispiel gemäß Figur 2 mit relativ steiler bzw. flacher Rampe angesteuert. Zum Beispiel handelt es sich bei der Pumpe 5 um eine kleinere und bei der Pumpe 6 um eine größere Pumpe. In Serienschaltung der beiden Pumpen 5, 6 wird die größere Pumpe 5 bei einer relativ steilen Einschaltrampe nicht beschleunigt bzw. bleibt stehen und pumpt nicht. Die kleinere Pumpe 6 wird beschleunigt und pumpt das entsprechende Medium gemäß ihrer Funktion.

Bei einer relativ flachen Einschaltrampe werden in der dargestellten Stellung beide Pumpen 5, 6 beschleunigt und pumpen das jeweilige Medium gemäß ihrer Funktionen. Wird dagegen das Relais 7 geschlossen, wird die Pumpe 6 außer Betrieb gesetzt bzw. abgekoppelt und lediglich die größere Pumpe 5 betreibbar bzw. ansteuerbar. Hierbei wird im Allgemeinen eine entsprechend flache Einschaltrampe (vgl. oben) gewählt, so dass die Pumpe 5 vorteilhaft beschleunigt und diese im nahezu optimalen Zustand ohne Verluste betreibbar ist.

### Bezugszeichenliste

- 1: Kontrolleinheit
- 2: Computer
- 3: Prozessor
- 4: Treibereinheit
- 5: Umwälzpumpe
- 6: Laugenpumpe
- 7: Schaltelemente
- 8: Sensor
- 9: Lastsensor
- 10: Aktuator
- 11: Aktuator
- 12: Ventil
- 13: Aktuator
- 14: Dosiervorrichtung
- 15: Interface
- 16: Display
- 17: Eingabeelement

- P: Phase
- S: Sternpunkt

## Patentansprüche

1. Haushaltsmaschine, wie ein Geschirrspüler oder eine Waschmaschine, mit einem Flüssigkeitskreislauf und wenigstens zwei Flüssigkeitspumpen (5, 6) mit jeweils einem Elektromotor, wobei wenigstens eine der beiden Pumpen (5, 6) an eine Kontrolleinheit (1, 2, 3) für die Motorsteuerung und/oder Regelung zuschaltbar ist, **dadurch gekennzeichnet, dass** hinsichtlich der Versorgung der beiden Pumpen mit elektrischer Energie eine Serienschaltung der beiden Pumpen (5, 6) vorgesehen ist.

2. Haushaltsmaschinen nach Anspruch 1, **dadurch gekennzeichnet, dass** wenigstens ein zwischen den Pumpen (5, 6) angeordnetes Schaltelement (7) für die Motorsteuerung und/oder Regelung vorgesehen ist.

3. Haushaltsmaschinen nach einem der vorgenannten Ansprüche **dadurch gekennzeichnet, dass** die Elektromotoren elektronisch kommutierte Synchronmotoren sind.

4. Haushaltsmaschinen nach einem der vorgenannten Ansprüche **dadurch gekennzeichnet, dass** die Kontrolleinheit ein Netzteil zur Erzeugung von Niedervoltspannung für die Elektromotoren umfasst.

5. Haushaltsmaschinen nach einem der vorgenannten Ansprüche **dadurch gekennzeichnet, dass** wenigstens ein Schaltelement zum Schalten einer Flüssigkeitsheizung vorgesehen ist.

6. Haushaltsmaschine nach einem der vorgenannten Ansprüche **dadurch gekennzeichnet, dass** ein Schaltelement zur Strombegrenzung vorgesehen ist.

7. Haushaltsmaschine nach einem der vorgenannten Ansprüche **dadurch gekennzeichnet, dass** ein Schaltelement zum Schalten des Flüssigkeitsstroms zwischen zwei Leitungsführungen vorgesehen ist.

8. Haushaltsmaschine nach einem der vorgenannten Ansprüche **dadurch gekennzeichnet, dass** wenigstens ein Sensor (8, 9) zur Erfassung von wenigstens einem Betriebsparameter der Haushaltsmaschine vorgesehen ist, der mit der Kontrolleinheit (1, 2, 3) in Verbindung steht.

9. Haushaltsmaschine nach einem der vorgenannten Ansprüche **dadurch gekennzeichnet, dass** ein Algorithmus in die Kontrolleinheit integriert ist, welcher die Welligkeit einer gleichgerichteten Versorgungsspannung ausregelt, um einen Brummton an einem Rotor der Pumpen zu vermeiden.

10. Haushaltsmaschine nach einem der vorgenannten Ansprüche **dadurch gekennzeichnet, dass** ein Algorithmus in die Kontrolleinheit integriert ist, der das sichere Anlaufen der Antriebsmotoren der Pumpen sicherstellt.

11. Haushaltsmaschine nach einem der vorgenannten Ansprüche **dadurch gekennzeichnet, dass** eine Schnittstelle (15) für eine Datenübertragung an einen externen Computer vorgesehen ist.

12. Haushaltsmaschine nach Anspruch 11, **dadurch gekennzeichnet, dass** die Schnittstelle (15) für eine drahtlose Datenübertragung ausgebildet ist.

## Claims

1. A household machine, such as a dishwasher or a washing machine, with a liquid circuit and at least two liquid pumps (5, 6) each with an electric motor, wherein at least one of the two pumps (5, 6) can be connected to a control unit (1, 2, 3) for motor control and/or regulation, **characterised in that** with respect to supplying the two pumps with electrical power a series connection of the two pumps (5, 6) is provided.

2. The household machine according to claim 1, **characterised in that** at least one switching element (7) arranged between the pumps (5, 6) is provided for the motor control and/or regulation.

3. The household machine according to one of the preceding claims, **characterised in that** the electric motors are electronically commutated synchronous motors.

4. The household machine according to one of the preceding claims, **characterised in that** the control unit comprises a power supply unit for generating low voltage for the electric motors.

5. The household machine according to one of the preceding claims, **characterised in that** at least one switching element is provided for connecting a liquid heating system.

6. The household machine according to one of the preceding claims, **characterised in that** a switching element is provided for limiting the current.

7. The household machine according to one of the preceding claims, **characterised in that** a switching element is provided for switching the flow of liquid between two routes.

8. The household machine according to one of the preceding claims, **characterised in that** at least one sensor (8, 9) is provided for detecting at least one operating parameter of the household machine which is in connection with the control unit (1, 2, 3).

9. The household machine according to one of the preceding claims, **characterised in that** an algorithm is integrated into the control unit which corrects the waviness of a same-directed supply voltage in order to avoid a humming sound on a rotor of the pumps.

10. The household machine according to one of the preceding claims, **characterised in that** an algorithm is integrated into the control unit which ensures the reliable starting of the drive motors of the pumps.

11. The household machine according to one of the preceding claims, **characterised in that** an interface (15) is provided for transferring data to an external computer.

12. The household machine according to claim 11, **characterised in that** the interface (15) is designed for wireless data transmission.

## Revendications

1. Appareil électroménager, tel qu'un lave-vaisselle ou un lave-linge, comportant un circuit de liquide et au moins deux pompes à liquide (5, 6) équipées chacune d'un moteur électrique, au moins l'une des deux pompes (5, 6) pouvant être raccordée à une unité de contrôle (1, 2, 3) pour la commande de moteur et/ou la régulation,
**caractérisé en ce qu'**il est prévu un branchement en série des deux pompes (5, 6) pour l'alimentation des deux pompes en énergie électrique.

2. Appareil électroménager selon la revendication 1,
**caractérisé en ce qu'**il est prévu au moins un élément de circuit (7) agencé entre les pompes (5, 6) pour la commande de moteur et/ou la régulation.

3. Appareil électroménager selon l'une des revendications précédentes,
**caractérisé en ce que** les moteurs électriques sont des moteurs synchrones commutés électroniquement.

4. Appareil électroménager selon l'une des revendications précédentes,
**caractérisé en ce que** l'unité de contrôle comprend un bloc d'alimentation destiné à produire une basse tension pour les moteurs électriques.

5. Appareil électroménager selon l'une des revendications précédentes,
**caractérisé en ce qu'**il est prévu au moins un élément de circuit afin de commuter un chauffage de liquide.

6. Appareil électroménager selon l'une des revendications précédentes,
**caractérisé en ce qu'**il est prévu un élément de circuit destiné à limiter le courant.

7. Appareil électroménager selon l'une des revendications précédentes,
**caractérisé en ce qu'**il est prévu un élément de circuit destiné à commuter le flux de liquide entre deux directions de conduite.

8. Appareil électroménager selon l'une des revendications précédentes,
**caractérisé en ce qu'**il est prévu au moins un capteur (8, 9) destiné à détecter au moins un paramètre de service de l'appareil électroménager, lequel capteur est en liaison avec l'unité de contrôle (1, 2, 3),

9. Appareil électroménager selon l'une des revendications précédentes,
**caractérisé en ce qu'**un algorithme est intégré dans l'unité de contrôle, lequel règle l'ondulation d'une tension d'alimentation redressée afin d'éviter un bruit de ronflement sur un rotor des pompes.

10. Appareil électroménager selon l'une des revendications précédentes,
**caractérisé en ce qu'**un algorithme est intégré dans l'unité de contrôle, lequel garantit le démarrage sûr des moteurs d'entraînement des pompes.

11. Appareil électroménager selon l'une des revendications précédentes,
**caractérisé en ce qu'**une interface (15) est prévue pour une transmission de données à un ordinateur externe.

12. Appareil électroménager selon la revendication 11,
**caractérisé en ce que** l'interface (15) est conçue pour une transmission de données sans fil.
